# EUROPÄISCHE PATENTANMELDUNG

(11) **EP 4 096 198 A1**
(43) Veröffentlichungstag der Anmeldung: **30.11.2022**
(21) Anmeldenummer: 22170968.6
(22) Anmeldetag: 29.04.2022
(51) Int. Cl.: H04L 67/12, H04L 43/00, G07C 5/08, G07C 5/00, H04L 41/06, H04L 12/40, H04L 69/08, H04L 12/66

(54) **VERFAHREN ZUR DIAGNOSE EINES BORDNETZES EINES FAHRZEUGS**

(30) Priorität: 27.05.2021 DE 102021205383
(71) Anmelder: Robert Bosch GmbH, 70442 Stuttgart (DE)
(72) Erfinder: Brust, Olaf, 73230 Kirchheim Unter Teck (DE); Dusserre, Etienne, 74076 Heilbronn (DE)

(57) **Zusammenfassung**

Die Erfindung betrifft ein Verfahren zur Diagnose eines Bordnetzes (101) eines Fahrzeugs (100), das mehrere, miteinander in Kommunikationsverbindung stehende Recheneinheiten (110 ,120, 130) umfasst, wobei auf einer (110) der mehreren Recheneinheiten eine Diagnose-Anwendung (114) ausgeführt wird, wobei von der Diagnose-Anwendung (114) von einer externen Diagnoseeinheit (150) eine Diagnose-Anfrage empfangen wird, wobei die Diagnose-Anfrage von der Diagnose-Anwendung (114) analysiert wird, und wobei von der Diagnose-Anwendung (114), basierend auf einem Inhalt der Diagnose-Anfrage, Daten an wenigstens eine Recheneinheit (120, 130) gesendet und/oder eine Diagnose-Antwort (240) an die externe Diagnoseeinheit (150) gesendet werden.

## Beschreibung

Die vorliegende Erfindung betrifft ein Verfahren zur Diagnose eines Bordnetzes eines Fahrzeugs, eine Recheneinheit und ein Computerprogramm zu dessen Durchführung sowie ein solches Bordnetz.

### Hintergrund der Erfindung

Bordnetze (insbesondere Datenbordnetze) eines Fahrzeugs umfassen typischerweise mehrere verschiedene Fahrzeugsteuergeräte, die miteinander direkt oder indirekt in Kommunikationsverbindung stehen. Hierfür werden typischerweise verschiedene Kommunikationsmedien wie z.B. Busse (z.B. CAN- oder LIN-Bus oder auch Ethernet) verwendet. Für die Diagnose eines solchen Bordnetzes - eine Fahrzeugdiagnose - kann ein externer Diagnosetester (oftmals auch nur als Tester bezeichnet) verwendet werden, der an das Bordnetz kommunikativ (bzw. datenübertragen) angebunden wird. Unter einer Diagnose ist dabei z.B. zu verstehen, dass verschiedene Information vom Bordnetz bzw. dessen Steuergeräten abgefragt bzw. hierfür vorgeben werden, ggf. auch mit speziellen Diagnose-Betriebsmodi der Steuergeräte.

### Offenbarung der Erfindung

Erfindungsgemäß werden ein Verfahren zur Diagnose, eine Recheneinheit und ein Computerprogramm zu dessen Durchführung sowie ein Bordnetz mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung beschäftigt sich mit der Diagnose eines Bordnetzes eines Fahrzeugs, das mehrere, miteinander in Kommunikationsverbindung stehende Recheneinheiten (sog. Steuergeräte) umfasst. Für die Diagnose eines solchen Bordnetzes kann, wie erwähnt ein externer Diagnosetester oder auch allgemein eine externe Diagnoseeinheit verwendet werden, der bzw. die an das Bordnetz kommunikativ (bzw. datenübertragend) angebunden wird. Dies kann z.B. im Rahmen eines Werkstattaufenthalts oder während der Fahrzeugentwicklung erfolgen. Hierzu wird üblicherweise jedem Steuergerät eine Diagnoseadresse zugeordnet. Die externe Diagnoseeinheit kann dann über diese Adresse ein Steuergerät eindeutig ansprechen. Dazu müssen der Diagnoseeinheit die Adressen der interessierenden Steuergeräte im Fahrzeug bekannt sein.

Der Zugang zu den Steuergeräten kann in modernen Fahrzeugen über ein sog. Diagnosegateway realisiert werden. Das Diagnosegateway leitet eine Diagnosenachricht von der Diagnoseeinheit, basierend auf der Diagnoseadresse, an das angesprochene Steuergerät weiter und die Antwort des Steuergeräts entsprechend zurück an die Diagnoseeinheit. Dabei kann im Diagnosegateway eine Übersetzung der Adresse erfolgen, z.B. von einer logischen Adresse zu einem CAN-Identifier. Bei Einsatz eines Diagnosegateways ist es der Diagnoseeinheit allerdings nicht möglich, auf Signale innerhalb des Fahrzeugs, wie z.B. auf dem Netzwerk übertragene Istwerte, zuzugreifen, da diese nicht vom Diagnosegateway weitergeleitet werden.

Im Rahmen der vorliegenden Erfindung wird nun der Einsatz einer sog. System-Diagnose-Software vorgeschlagen. Hierbei handelt es sich um eine Diagnose-Anwendung (Software), die auf einer der mehreren Recheneinheiten des Bordnetzes ausgeführt wird. Mittels einer solchen Diagnose-Anwendung - einer Softwarekomponente im Fahrzeug - kann ein multi-ECU-System im Fahrzeug (ECU steht dabei für "Electronic Control Unit", d.h. Steuergerät) als eine Entität gegenüber einer zugreifenden Diagnoseeinheit dargestellt werden. Dafür erhält die Diagnose-Anwendung für das multi-ECU-System eine eigene Adresse, über die das gesamte System bzw. Bordnetz zu Diagnosezwecken angesprochen werden kann. Diese Diagnosezwecke beinhalten z.B. das Auslesen von Istwerten und Fehlern, das Steuern von Aktuatoren, das Starten von Routinen, und das Re-Programmieren des Systems.

Als Recheneinheiten kommen dabei nicht nur Steuergeräte bzw. Fahrzeugsteuergeräte in Betracht, sondern auch Aktoren und Sensoren, soweit diese einen entsprechenden Prozessor oder dergleichen aufweisen und Daten bzw. Signale empfangen bzw. versenden können. Ebenso kommen sog. Fahrzeugzentralrechner in Betracht; dabei handelt es sich um leistungsstarke Recheneinheiten. Als Recheneinheit, auf der die Diagnose-Anwendung ausgeführt wird, kommt grundsätzliche jede Recheneinheit im Bordnetz in Betracht, zweckmäßig ist aber ein Steuergerät, insbesondere der Fahrzeugzentralrechner.

Bei der Diagnose wird dann von der Diagnose-Anwendung von einer externen Diagnoseeinheit (dem Tester) eine Diagnose-Anfrage empfangen; diese Diagnose-Anfrage wird dann von der Diagnose-Anwendung analysiert, und, basierend auf einem Inhalt der Diagnose-Anfrage, werden dann von der Diagnose-Anwendung Daten an wenigstens eine Recheneinheit (im Bordnetz) gesendet und/oder es wird eine Diagnose-Antwort an die externe Diagnoseeinheit gesendet.

Die Analyse der Diagnose-Anfrage kann hierzu insbesondere umfassen, wenigstens eine der mehreren Recheneinheiten, die in der Diagnose-Anfrage adressiert ist, zu bestimmen, wobei eine Kommunikation mit der wenigstens einen, adressierten Recheneinheit dann ausgehend von der Diagnose-Anwendung erfolgt.

Um zu bestimmen, welche Recheneinheiten adressiert sind, benötigt die Diagnose-Anwendung vorzugsweise Informationen über das System (bzw. Bordnetz); diese Informationen werden im Folgenden auch als Systeminformationen bezeichnet. Diese beinhalten z.B. die Zuordnung von Diagnoseinformationen zu einer Recheneinheit. Es handelt es sich also insbesondere um Quelleninformationen, d.h. um Information, welche Nachricht an welche(s) Steuergerät(e) weitergeleitet werden müssen. Diese Systeminformationen können dabei entweder in der Diagnose-Anwendung hinterlegt sein (statisch), oder auch erlernt werden (dynamisch). Dies kann z.B. initial oder immer bei einer Änderung an oder in einem Steuergerät (z.B. bei einem Softwareupdate) erfolgen.

Eine Diagnose-Anfrage kann dabei verschiedene Arten von Nachrichten (Diagnosenachrichten) umfassen. Eine erste Art von Nachricht ist eine Dienste-Nachricht (oder Service-Nachricht). In einer solchen Dienste-Nachricht ist insbesondere wenigstens eine der mehreren Recheneinheiten adressiert, von der Diagnosedaten auszulesen sind und/oder an die Diagnosedaten zu übergeben sind. Von der Diagnose-Anwendung werden eine solche Dienste-Nachricht oder ggf. die (darin enthaltenen) Diagnosedaten an die wenigstens eine, adressierte Recheneinheit weitergeleitet. Die betreffende Recheneinheit gibt die Diagnosedaten dann an die Diagnose-Anwendung zurück bzw. letztere empfängt diese und sie werden als Teil der Diagnose-Antwort an die externe Diagnoseeinheit gesendet.

Ebenso möglich ist es aber, dass Diagnosedaten betreffend wenigstens eine Recheneinheit von der Diagnose-Anwendung als Teil der Diagnose-Antwort an die externe Diagnoseeinheit gesendet werden, ohne dass die Nachricht zuvor an eine Recheneinheit weitergeleitet worden ist. Von der Diagnose-Anwendung können hierzu insbesondere zwischen den mehreren Recheneinheiten ausgetauschte Daten und/oder Signale analysiert und basierend darauf erweiterte Diagnoseinformationen erzeugt werden, basierend worauf dann die Diagnosedaten bestimmt und als Teil der Diagnose-Antwort an die externe Diagnoseeinheit gesendet werden.

Diese Analyse der ausgetauschten Daten bzw. Signale sowie das darauf basierende Erzeugen von erweiterten Diagnoseinformationen können bevorzugt zeitlich unabhängig von einer Diagnose-Anfrage erfolgen, z.B. regelmäßig, bei Auftreten eines Ereignisses oder immer zu vorbestimmten Zeiten, z.B. nach oder bei einem Aufstarten des Bordnetzes. Diese erweiterten Diagnoseinformationen können dann z.B. in einem Speicher hinterlegt und bei Bedarf verwendet werden. Die Quelle der erweiterten Diagnoseinformationen wird insbesondere in den Systeminformationen hinterlegt.

Eine weitere Art von Nachricht ist eine Kontroll-Nachricht, in der wenigstens eine der mehreren Recheneinheiten adressiert ist, die in einen vorgegebenen Zustand versetzt werden soll, z.B. in einen speziellen Diagnosemodus, in dem andere Daten und/oder Signale als üblich ausgegeben werden. Hierzu wird von der Diagnose-Anwendung insbesondere die Kontroll-Nachricht an die wenigstens eine adressierte Recheneinheit weitergeleitet, und/oder die wenigstens eine, adressierte Recheneinheit wird in den vorgegebenen Zustand versetzt.

Eine weitere Art von Nachricht ist eine Programmierungs-Nachricht, in der genau eine der mehreren Recheneinheiten adressiert ist, in die Programmdaten (für z.B. Steuergerätesoftware) zu schreiben sind und/oder von der Programmdaten zu lesen sind. Hierzu werden von der Diagnose-Anwendung insbesondere die Programmierungs-Nachricht oder zu schreibende Programmdaten an die eine adressierte Recheneinheit weitergeleitet, und/oder es werden Programmdaten von der einen adressierten Recheneinheit empfangen, und dann insbesondere als Diagnose-Antwort (oder ggf. als Teil davon) an die externe Diagnoseeinheit gesendet.

Die Diagnose-Anwendung sammelt und generiert also z.B. Diagnoseinformationen über das gesamte Bordnetz bzw. System. Diese Informationen stellt sie der Diagnoseeinheit auf Anfrage (über die Diagnose-Anfrage) zur Verfügung (als Diagnose-Antwort). Bei der Kommunikation mit der Diagnoseeinheit wird lediglich die Adresse der Diagnose-Anwendung verwendet. Zum Sammeln der Informationen kann sich die Diagnose-Anwendung verschiedener Methoden bedienen. Dazu gehören z.B. das Weiterleiten von Diagnosenachrichten; die erhaltene Diagnosenachricht wird hierzu basierend auf ihrem Inhalt an ein oder mehrere Recheneinheiten weitergeleitet. Die von dort erhaltenen Informationen werden dann von der Diagnose-Anwendung als Informationen des Bordnetzes bzw. des Systems an die Diagnoseeinheit übermittelt.

Ebenso kann die Diagnose-Anwendung Zugriff auf eine normale Kommunikation (mit Austausch von Daten bzw. Signalen) im Bordnetz haben. Die Diagnose-Anwendung empfängt hierzu Daten bzw. Signale aus der Kommunikation der Recheneinheiten bzw. Steuergeräte untereinander (z.B. durch Belauschen auf dem Netzwerk) und generiert daraus erweiterte Diagnoseinformationen. Für das Erzeugen von Diagnoseinformationen des gesamten Systems kann die Diagnose-Anwendung Informationen aus beiden Möglichkeiten kombinieren. Darüber hinaus verteilt die Diagnose-Anwendung z.B. bestimmte Diagnoseanfragen der Diagnoseeinheit bei Bedarf an ein oder mehrere Recheneinheiten beispielsweise bei der Re-Programmierung des Systems. Denkbar ist, dass für die Kommunikation zwischen Diagnoseeinheit und Diagnose-Anwendung einerseits und zwischen Diagnoseanwendung und adressiertem Steuergerät andererseits verschiedene Protokolle bzw. Kommunikationsprotokolle verwendet werden.

Der Unterschied zu einem Diagnosegateway liegt hierbei insbesondere in der Identifikation der Zielrecheneinheiten bzw. Zielsteuergeräte. Diese basiert auf dem Inhalt der Diagnose-Anfrage bzw. Diagnosenachricht und nicht auf der Diagnoseadresse eines Steuergerätes.

Insgesamt ergeben sich damit verschiedene Vorteile. Es ist eine Reduktion der Komplexität in der Diagnoseeinheit möglich (weniger Adressen nötig), und Informationen aus mehreren Steuergeräten bzw. Recheneinheiten können zu einer Diagnoseinformation zusammengeführt werden. Dies erfolgt bisher typischerweise in der Diagnoseeinheit.

Zudem ist eine erweiterte Diagnose möglich. So lassen sich erweiterte Diagnoseinformationen aus Signalen in der Diagnose-Anwendung erzeugen, z.B. Fehlercodes für das System. Die Signale selbst müssen dabei nicht offengelegt werden, sondern lediglich die Diagnoseinformationen.

Erweiterte Diagnosefunktionen, wie z.B. Algorithmen für eine prädiktive Diagnose für das System können in der Diagnose-Anwendung realisiert werden und müssen nicht offengelegt werden, da von der Diagnose-Anwendung nur die relevanten Informationen für die Diagnose herausgegeben werden, nicht aber deren Entstehungsweise.

Zudem wird ein reduzierter Aufwand für die Integration erreicht. Bei der Entwicklung der Diagnose muss nur die Diagnose-Anwendung als eine Entität der Diagnoseeinheit bekannt sein. Ebenso wird eine vereinfachte Kundenadaptierung erreicht, da eine abweichende Anforderung im Diagnoseprotokoll eines neuen Kunden z.B. nicht mehr in jedem Steuergerät umgesetzt werden muss, vielmehr kann die Diagnose-Anwendung eine Übersetzung vornehmen.

Indem redundante Informationen aus verschiedenen Steuergeräten in eine Systeminformation zusammengefasst werden, kann eine systembasierte Diagnose entwickelt werden.

Eine erfindungsgemäße Recheneinheit, z.B. ein Steuergerät eines Fahrzeugs, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

Kurze Beschreibung der Zeichnungen
Figur 1 zeigt schematisch ein erfindungsgemäßes Bordnetz in einer bevorzugten Ausgestaltung in einem Fahrzeug.
Figuren 2 bis 5 zeigen schematisch einen Ablauf eines erfindungsgemäßen Verfahrens in einer bevorzugten Ausführungsform.

### Ausführungsform(en) der Erfindung

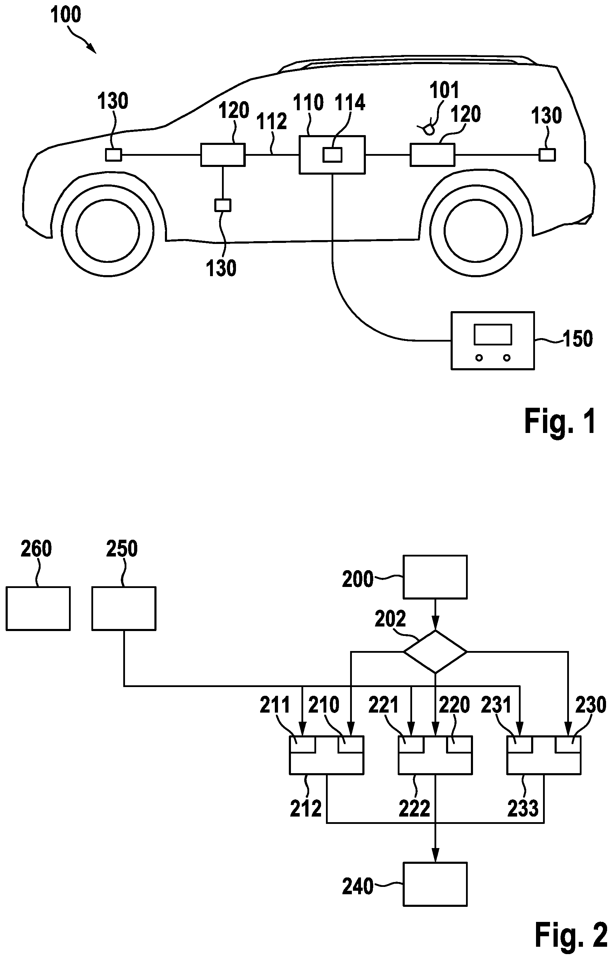

In Figur 1 ist schematisch ein erfindungsgemäßes Bordnetz 101 in einer bevorzugten Ausgestaltung in einem Fahrzeug 100 dargestellt, bei dem eine im Rahmen der Erfindung vorgeschlagene Diagnose durchgeführt werden kann. Das Bordnetz 101 umfasst beispielhaft einen Fahrzeugzentralrechner 110, zwei Fahrzeugsteuergeräte 120 sowie mehrere Aktoren und Sensoren 130 (hier soll nicht nach Aktoren und Sensoren unterschieden werden).

Hierbei handelt es sich um Recheneinheiten, die miteinander in Kommunikationsverbindung stehen, z.B. mittels eines oder mehrerer Kommunikationsmedien 112. Diese müssen nicht notwendigerweise für alle Verbindungen zwischen Recheneinheiten identisch sein, denkbar ist eine Unterscheidung je nach Art der Recheneinheit bzw. der zu verbindenden Recheneinheiten. So sind einfachere Sensoren z.B. nur über LIN angebunden, etwas komplexere Steuergeräte z.B. über CAN oder Ethernet.

Auf der als Fahrzeugzentralrechner ausgebildeten Recheneinheit 110 wird beispielhaft eine Diagnose-Anwendung 114 ausgeführt, auch als System-Diagnose-Software bezeichnet. Weiterhin ist neben dem Fahrzeug 100 eine externe, d.h. nicht zum Bordnetz bzw. zum Fahrzeug gehörige, Diagnoseeinheit 150, auch als Diagnosetester oder Tester bezeichnet, gezeigt. Diese ist über eine geeignete Kommunikationsverbindung an das Bordnetz 101, insbesondere den Fahrzeugzentralrechner 110, angeschlossen. Beispielsweise kann hierzu eine sog. OBD-Schnittstelle verwendet werden. Die Diagnoseeinheit 150 kommuniziert hierbei nur mit der Diagnose-Anwendung 114 auf dem Fahrzeugzentralrechner, nicht mit den anderen Recheneinheiten.

In Figur 2 ist nun eine Übersicht über den Ablauf eines erfindungsgemäßen Verfahrens in einer bevorzugten Ausführungsform gezeigt, also der Ablauf einer Diagnose bei dem Bordnetz, wie es z.B. in Figur 1 gezeigt ist, bzw. dort insbesondere der einzelnen Recheneinheiten.

Zunächst soll die Funktionsweise der Diagnose-Anwendung beschrieben werden. Bei der Kommunikation der Diagnose-Anwendung mit der Diagnoseeinheit oder Recheneinheiten bzw. Steuergeräten des Bordnetzes wird als Diagnoseprotokoll z.B. der Standard "Unified Diagnostic Services" ((UDS) wie in der Norm ISO 14229-1:2020 definiert zugrunde gelegt. Die Diagnose-Anwendung kann für die Kommunikation mit den Recheneinheiten aber auch alternative Protokolle einsetzen. Die Diagnose-Anwendung übersetzt die Nachrichten vom Tester dann in das andere Protokoll bzw. umgekehrt.

Als eine Protokollvariante kommt, z.B. als alternativer Standard, beispielsweise für eine Re-Programmierung das "Universal Measurement and Calibration Protocol" (XCP), wie es in der Norm ASAM MCD-1 definiert ist, in Betracht, das in der Steuergeräteentwicklung generell häufig zum Einsatz kommt. Als andere Protokollvariante kann auch ein proprietäres Protokoll verwendet werden, das entsprechend definiert und eingesetzt wird. Dieses müsste dann nicht offengelegt werden (es wird ja nur für die Kommunikation zwischen der Diagnose-Anwendung und den Recheneinheiten im Bordnetz verwendet, nicht für die Kommunikation zwischen Diagnose-Anwendung und dem Tester), wodurch die Recheneinheiten bzw. Steuergeräte sicherer gegen Angriffe durch Standardtools geschützt wären.

Bei der Diagnose wird der Tester dann zunächst mit dem Bordnetz verbunden, sodass eine Kommunikation mit der Diagnose-Anwendung möglich ist. Dann wird eine Diagnose-Anfrage (Request) 200 vom Tester an die Diagnose-Anwendung gesendet, die diese empfängt. Diese Diagnose-Anfrage 200 kann verschiedene Arten von Nachrichten umfassen, nämlich z.B. eine Dienste-Nachricht 210, eine Kontroll-Nachricht 220 oder eine Programmier-Nachricht 230. Diese Nachrichten vom Tester können dann z.B. an eine oder mehrere Recheneinheiten im Bordnetz weitergeleitet werden.

Für eine solche Weiterleitung können unterschiedlich Varianten eingesetzt werden. Eine Variante ist nachrichten-basiert; hierbei empfängt die Diagnose-Anwendung immer erst die gesamte Nachricht, bevor sie an eine Recheneinheit weitergeleitet wird. Eine andere Variante ist frame-basiert; hierbei wird eine Nachricht segmentiert übertragen, wie es zum Beispiel bei DoCAN ("Diagnostic communication over Controller Area Network") gemäß der Norm ISO 15765-2:2016-04 der Fall ist. Die Nachricht kann auch nach jedem empfangenen Frame ebenfalls frameweise weitergeleitet werden.

Nachfolgend soll genauer auf den übergeordneten Ablauf der Diagnose eingegangen werden, wie er in Figur 2 gezeigt und schon kurz erläutert wurde. Zu Beginn des Programmablaufs in der Diagnose-Anwendung werden in einem Schritt 250 Systeminformationen 211, 221, 231 verwendet, und zwar insbesondere abhängig von den verschiedenen Typen von Nachrichten. Diese können Daten von alle Recheneinheiten beinhalten, die (als Quellen) Diagnoseinformationen (z.B. DTC, DID) zur Verfügung stellen. Als Recheneinheit bzw. Quelle kann dabei ein Steuergerät, Aktuator, Sensor, oder die Diagnose-Anwendung selbst (auch die Recheneinheit, auf der er ausgeführt wird) in Betracht kommen.

Die Systeminformationen können durch verschiedene Varianten erzeugt werden. Eine Möglichkeit ist eine statische Erzeugung. Die Systeminformationen werden hierbei statisch in der Diagnose-Anwendung hinterlegt und werden bei einer Änderung der Software in einem Steuergerät aktualisiert.

Eine andere Möglichkeit ist eine lernende Erzeugung. Die Diagnose-Anwendung lernt hierbei die Systeminformationen durch Auslesen aus den Recheneinheiten bzw. Quellen des Bordnetzes, z.B. bei einem Softwareupdate im Bordnetz. Dies hat den Vorteil, dass die Diagnose-Anwendung nach einer Änderung der Software eines Steuergerätes nicht notwendigerweise aktualisiert werden muss.

Auf die Systeminformationen wird in den nächsten Schritten 212, 222, 232, in denen die Nachrichten 210, 220 und 230 verarbeitet werden, zurückgegriffen Empfängt die Diagnose-Anwendung vom Tester eine Nachricht mit der Diagnose-Anfrage 200, wird diese zunächst z.B. anhand der Service Identifikation (SID) in Schritt 202 typisiert und je nach Typ an einen Schritt 212, 222 oder 232 übergeben.

Die Nachrichten sind dabei, wie erwähnt, z.B. in folgende Typen eingeteilt: Bei einer Dienste-Nachricht 210 (oder Service-Nachricht) handelt es sich um eine Nachricht, bei der Diagnoseinformationen (bzw. Diagnosedaten) vom Bordnetz bzw. den Recheneinheiten (nachfolgend auch vereinfachend als System bezeichnet) gelesen oder an dorthin übergeben werden. Bei UDS sind das z.B. "ReadDataByldentifier", "InputOutputControlByldentifier" oder "ReadDTCInformation".

Bei einer Kontroll-Nachricht 220 handelt es sich um eine Nachricht, bei der das System oder eine bestimmte Recheneinheit in einen bestimmten Zustand versetzt werden soll. Bei UDS sind das z.B. "SessionControl", "Authentication" oder "ControlDTCSetting". Damit können z.B. verschiedene bzw. unterschiedliche Dienste in einer Recheneinheit aktiviert werden.

Bei einer Programmierungs-Nachricht 230 handelt es sich um eine Nachricht, die direkt zum Schreiben oder Lesen der Steuergerätesoftware (Programmdaten) dient. Bei UDS sind das z.B. "RequestDownload", "TransferData" oder "RequestTransferExit". Es können aber auch spezielle Routinen z.B. für das Löschen oder Überprüfen eines Speicherbereiches dazu gezählt werden.

Entsprechend dem Typ der Nachricht wird dann ein Schritt bzw. eine Aktion ausgeführt, bei der ggf. eine Antwort erhalten wird (z.B. wenn die Nachricht an eine Recheneinheit weitergeleitet wird, die dann eine Antwort zurückgibt), die dann in oder als Teil einer Diagnose-Antwort 240 zurück an den Tester gesendet wird. Damit ist ein Durchlauf dieses Pfades abgeschlossen. Das Eintreffen einer neuen Nachricht starten ihn von Neuem.

Empfängt die Diagnose-Anwendung vom System eine Aktualisierung der internen Daten, z.B. über normale Kommunikation, werden die aktualisierten Daten an den Block 260 übergeben. In diesem werden dann die erweiterten Diagnoseinformationen generiert. Diese können bei Eintreffen einer Nachricht 210 abgefragt werden. Damit ist dieser Pfad abgeschlossen. Das Eintreffen einer neuen Aktualisierung starten ihn von Neuem.

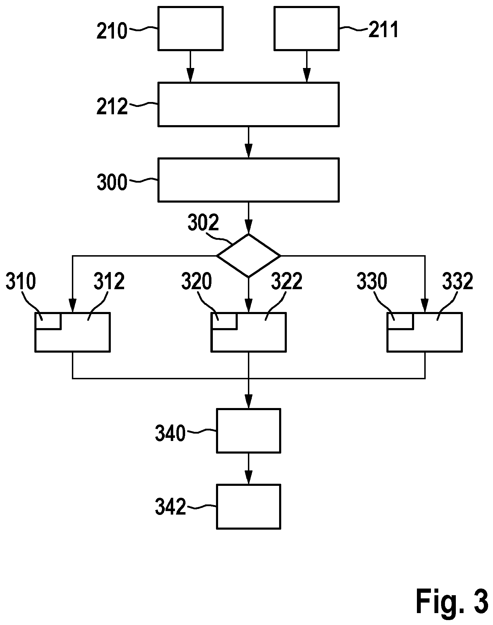

In Figur 3 ist die Behandlung einer Dienste-Nachricht 210 detaillierter dargestellt. Liegen an den Eingängen von Schritt 212 die Systeminformationen 211 und eine Dienste-Nachricht 210 an, wird die nachfolgende Aktivität ausgeführt. In Schritt 300 wird basierend auf der Identifikation der Dienste-Nachricht, einer möglichen Unterfunktion sowie einer oder mehreren Diagnoseinformationen ermittelt, welche Quellen (Recheneinheiten) diese zur Verfügung stellen (hierzu dienen die Systeminformationen). Daraus ergibt sich dann auch der Quellentyp 302 und somit, wie die Nachricht an die Steuergeräte bzw. Recheneinheiten weitergeleitet werden muss.

Der Typ der Quelle kann eine Systemquelle 310 sein. Jedes Steuergerät und die Diagnose-Anwendung sind Quellen für die angefragte(n) Information(en). In Schritt 312 wird die Nachricht funktional an alle Steuergeräte weitergeleitet. Zusätzlich fragt die Diagnose-Anwendung die Information intern ab.

Der Typ der Quelle kann eine Multi-Quelle 320 (mehrere Quellen) sein. Mehrere (aber nicht notwendigerweise alle) Steuergeräte und/oder die Diagnose-Anwendung sind Quellen für die angefragte(n) Information(en). In Schritt 322 wird die Nachricht physikalisch an jedes als Quelle identifizierte (bzw. als solches adressierte) Steuergerät weitergeleitet. Dabei kann die Nachricht in Abhängigkeit von der angefragten Diagnoseinformation vor dem Weiterleiten aufgeteilt werden, sodass von jeder Quelle nur die von ihr zur Verfügung gestellten Informationen angefragt werden. Ist die Diagnose-Anwendung eine der Quellen, fragt die Diagnose-Anwendung die entsprechende Information intern ab.

Der Typ der Quelle kann auch eine Einzel-Quelle 330 sein. Ein Steuergerät oder die Diagnose-Anwendung ist die Quelle für die angefragte(n) Information(en). In Schritt 332 wird die Nachricht entweder physikalisch an das als Quelle identifizierte Steuergerät weitergeleitet oder die Diagnose-Anwendung fragt die Information(en) intern ab.

In Schritt 340 werden die Antworten der Quellen eingesammelt und zu einer Antwort 342 zusammengefasst. Diese wird über den Ausgang an den übergeordneten Ablauf übergeben und damit insbesondere als Teil der Diagnose-Antwort an die Diagnoseeinheit gesendet.

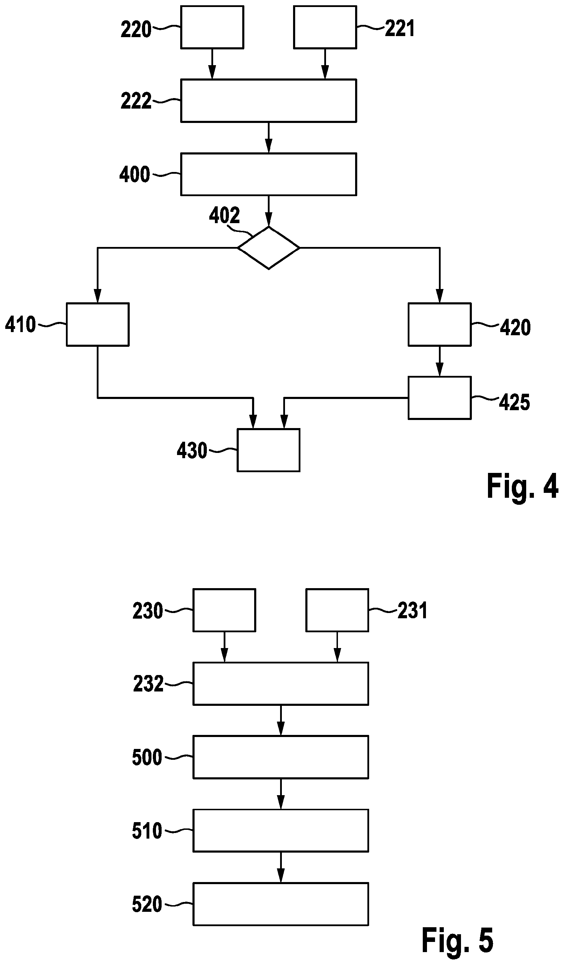

In Figur 4 ist die Behandlung einer Kontroll-Nachricht 220 detaillierter dargestellt. Liegen an den Eingängen von Schritt 222 die Systeminformationen 211 und eine Kontroll-Nachricht 220 an, wird die nachfolgende Aktivität ausgeführt. In Schritt 400 wird (ausschließlich) basierend auf der Identifikation der Kontroll-Nachricht ermittelt, von welchem Weiterleitungstyp 402 sie ist, d.h. ob diese direkt an alle Steuergeräte weitergeleitet wird ober es eine spezielle Behandlung gibt.

Für den Fall, dass keine direkte Weiterleitung vorgesehen ist, gibt es für die Kontroll-Nachricht eine spezielle Behandlung bzw. Aktion 410. Zu diesen Nachrichten gehören die folgenden: "SecurityAccess", "Authentication" und "TesterPresent". Letztere kann optional auch weitergeleitet werden.

Bei den ersten beiden Kontroll-Nachrichten werden z.B. Informationen für Security-Mechanismen übertragen und basierend darauf zusätzliche Funktionen zugänglich gemacht. Diese Mechanismen können in jedem Steuergerät unterschiedlich umgesetzt sein, weshalb hier keine direkte Weiterleitung erfolgen kann. Die Diagnose-Anwendung sollte in diesem Fall die Mechanismen in jedem Steuergerät kennen und entsprechend mit den Steuergeräten kommunizieren. Aus deren Antworten generiert die Diagnose-Anwendung dann die finale Antwort an den externen Tester.

Bei einem "TesterPresent" handelt es sich z.B. um eine Information für die Diagnose-Anwendung, dass sie in einem zuvor kontrollierten Zustand bleiben soll. Da jedes Steuergerät ebenfalls in diesem Zustand ist, müssen die Steuergeräte ebenfalls in diesem gehalten werden. Dies kann sowohl durch eine Weiterleitung der Anfrage, aber auch durch ein eigenständiges periodisches Versenden der Nachricht an die Steuergeräte unabhängig von einer Anfrage des Testers erfolgen.

Ist die spezielle Behandlung 410 durchgeführt, wird die Antwort 430 über den Ausgang an den übergeordneten Ablauf übergeben.

Im Fall einer Systemquelle wird die Nachricht in Schritt 420 funktional an alle Steuergeräte weitergeleitet. In Schritt 425 werden die Antworten eingesammelt und zu der Antwort 430 zusammengefasst. Diese wird über den Ausgang an den übergeordneten Ablauf übergeben.

In Figur 5 ist die Behandlung einer Programmierungs-Nachricht 230 detaillierter dargestellt. Liegen an den Eingängen von Schritt 232 die Systeminformationen 231 und eine Programmierungs-Nachricht 230 an, wird die nachfolgende Aktivität ausgeführt. In Schritt 500 wird basierend auf Adressinformation in der Nachricht ermittelt, an welches Steuergerät diese weitergeleitet wird.

In Schritt 510 wird die Nachricht physikalisch an das Zielsteuergerät weitergeleitet. In Schritt 520 wird die Antwort empfangen und über den Ausgang an den übergeordneten Ablauf übergeben.

Insgesamt wird auf diese Weise also eine Diagnose eines Bordnetzes in einem Fahrzeug mit einer Vielzahl von Recheneinheiten oder Steuergeräten ermöglicht, bei der der Tester nur mit der Diagnose-Anwendung kommuniziert. Die Kommunikation mit den Recheneinheiten im Bordnetz erfolgt über die Diagnose-Anwendung und kann daher unabhängig vom Tester erfolgen, was z.B. das zu verwendende Kommunikationsprotokoll betrifft oder auch die Auswahl an Nachrichten, die dann tatsächlich weitergeleitet wird.

## Patentansprüche

1. Verfahren zur Diagnose eines Bordnetzes (101) eines Fahrzeugs (100), das mehrere, miteinander in Kommunikationsverbindung stehende Recheneinheiten (110 ,120, 130) umfasst, wobei auf einer (110) der mehreren Recheneinheiten eine Diagnose-Anwendung (114) ausgeführt wird,
wobei von der Diagnose-Anwendung (114) von einer externen Diagnoseeinheit (150) eine Diagnose-Anfrage (200) empfangen wird,
wobei die Diagnose-Anfrage (200) von der Diagnose-Anwendung (114) analysiert wird, und
wobei von der Diagnose-Anwendung (114), basierend auf einem Inhalt der Diagnose-Anfrage (200), Daten an wenigstens eine Recheneinheit (120, 130) gesendet und/oder eine Diagnose-Antwort (240) an die externe Diagnoseeinheit (150) gesendet werden.

2. Verfahren nach Anspruch 1, wobei die Analyse der Diagnose-Anfrage (200) umfasst, wenigstens eine der mehreren Recheneinheiten, die in der Diagnose-Anfrage (200) adressiert ist, zu bestimmen, und wobei eine Kommunikation mit der wenigstens einen adressierten Recheneinheit ausgehend von der Diagnose-Anwendung (114) erfolgt.

3. Verfahren nach einem der vorstehenden Ansprüche, wobei, wenn die Diagnose-Anfrage (200) eine Dienste-Nachricht (210) umfasst, in der wenigstens eine der mehreren Recheneinheiten adressiert ist, von der Diagnosedaten auszulesen sind und/oder an die Diagnosedaten zu übergeben sind, von der Diagnose-Anwendung (114) die Dienste-Nachricht (210) oder die Diagnosedaten an die wenigstens eine adressierte Recheneinheit weitergeleitet werden und/oder Diagnosedaten betreffend die wenigstens eine adressierte Recheneinheit als Teil der Diagnose-Antwort (240) an die externe Diagnoseeinheit (150) gesendet werden.

4. Verfahren nach Anspruch 3, wobei von der Diagnose-Anwendung (114) von der wenigstens einen adressierten Recheneinheit die Diagnosedaten empfangen und als Teil der Diagnose-Antwort (240) an die externe Diagnoseeinheit (150) gesendet werden.

5. Verfahren nach Anspruch 3 oder 4, wobei von der Diagnose-Anwendung (114) zwischen den mehreren Recheneinheiten (110, 120, 130) ausgetauschte Daten und/oder Signale analysiert und basierend darauf erweiterte Diagnoseinformationen (260) erzeugt werden, und wobei basierend auf den erweiterten Diagnoseinformationen die Diagnosedaten bestimmt und als Teil der Diagnose-Antwort (240) an die externe Diagnoseeinheit (150) gesendet werden.

6. Verfahren nach Anspruch 5, wobei von der Diagnose-Anwendung (114) zeitlich unabhängig von einer Diagnose-Anfrage die zwischen den mehreren Recheneinheiten ausgetauschten Daten und/oder Signale analysiert und basierend darauf die erweiterte Diagnoseinformationen (260) erzeugt werden.

7. Verfahren nach einem der vorstehenden Ansprüche, wobei, wenn die Diagnose-Anfrage (200) eine Kontroll-Nachricht (220) umfasst, wonach wenigstens eine der mehreren Recheneinheiten adressiert ist, die in einen vorgegebenen Zustand versetzt werden soll, von der Diagnose-Anwendung (114) die Kontroll-Nachricht (220) an die wenigstens eine adressierte Recheneinheit weitergeleitet wird und/oder die wenigstens eine adressierte Recheneinheit in den vorgegebenen Zustand versetzt wird.

8. Verfahren nach einem der vorstehenden Ansprüche, wobei, wenn die Diagnose-Anfrage (200) eine Programmierungs-Nachricht (230) umfasst, in der genau eine der mehreren Recheneinheiten adressiert ist, auf der Programmdaten zu schreiben sind und/oder von der Programmdaten zu lesen sind, von der Diagnose-Anwendung (114) die Programmierungs-Nachricht (230) oder zu schreibende Programmdaten an die adressierte Recheneinheit weitergeleitet werden und/oder Programmdaten von der adressierten Recheneinheit empfangen werden, und insbesondere als Teil der Diagnose-Antwort (240) an die externe Diagnoseeinheit (150) gesendet werden.

9. Verfahren nach einem der vorstehenden Ansprüche, wobei anhand von Systeminformationen (211, 221, 231) bestimmt wird, welche Recheneinheit adressiert ist, und wobei die Systeminformationen insbesondere initial und/oder wiederholt in der Diagnose-Anwendung (114) hinterlegt werden.

10. Verfahren nach Anspruch 9, wobei die Systeminformationen (211, 221, 231) dynamisch durch Auslesen der mehreren Recheneinheiten bestimmt oder generiert werden.

11. Verfahren nach einem der vorstehenden Ansprüche, wobei die Diagnose-Anfrage (200) von der Diagnose-Anwendung (114) mittels eines ersten Protokolls empfangen wird und mittels eines zweiten, von dem ersten verschiedenen Protokoll Daten an die wenigstens eine Recheneinheit (120 ,130) gesendet werden.

12. Verfahren nach einem der vorstehenden Ansprüche, wobei die mehreren Recheneinheiten (110, 120, 130) ausgewählt sind aus: Fahrzeugzentralrechner, Fahrzeugsteuergeräten, Aktoren und Sensoren.

13. Recheneinheit (110), die dazu eingerichtet ist, alle Verfahrensschritte eines Verfahrens nach einem der vorstehenden Ansprüche durchzuführen.

14. Bordnetz (101) eines Fahrzeugs (100) mit mehreren Recheneinheiten (110, 120, 130), die miteinander in Kommunikationsverbindung stehen und von denen eine als Recheneinheit (110) nach Anspruch 13 ausgebildet ist.

15. Computerprogramm, das eine Recheneinheit (110) dazu veranlasst, alle Verfahrensschritte eines Verfahrens nach einem der Ansprüche 1 bis 12 durchzuführen, wenn es auf der Recheneinheit (110) ausgeführt wird.

16. Maschinenlesbares Speichermedium mit einem darauf gespeicherten Computerprogramm nach Anspruch 15.
